# EUROPÄISCHE PATENTANMELDUNG

(11) **EP 2 098 765 A2**
(43) Veröffentlichungstag der Anmeldung: **09.09.2009**
(21) Anmeldenummer: 09154281.1
(22) Anmeldetag: 04.03.2009
(51) Int. Cl.: F16K 7/07, F16K 7/10, F16K 11/02, F16K 11/20

(54) **Mehrwegeventil zur flexiblen Steuerung von Druckmittelströmen**

(30) Priorität: 04.03.2008 DE 102008012557
(71) Anmelder: Robert Bosch GmbH, 70442 Stuttgart (DE)
(72) Erfinder: Bergmann, Klaus, 70499, Stuttgart (DE); Paulus, Theo, 46509, Xanten (DE)
(74) Vertreter: Kietzmann, Lutz

(57) **Zusammenfassung**

Mehrwegeventil zur Steuerung von Druckmittelströmen, umfassend ein Ventilgehäuse (1) mit äußeren Leitungsanschlüssen (P, A, B, R, S), welche über hier zugeordnete Kanalabschnitte (2a - 2e) in eine innere Ventilkammer (3) münden, in welchen mindestens ein bewegbares steuerdruckbetriebenes Schaltmittel zum wahlweise verbinden mindestens zweier Kanalabschnitte (2a - 2e) untergebracht ist, wobei das Schaltmittel mindestens eine als aufblasbares Elastomerelement (5a - 5d) ausgebildet ist, welches in Folge Beaufschlagung mit Steuerdruck zwischen Kanalabschnitten (6 - 6''') liegende Ventilkammerabschnitte (2a - 2e) voneinander trennt.

## Beschreibung

Die vorliegende Erfindung betrifft ein Mehrwegeventil zur Steuerung von Druckmittelströmen, umfassend ein Ventilgehäuse mit äußeren Leitungsanschlüssen, welche über je zugeordnete Kanalabschnitte in eine innere Ventilkammer des Ventilgehäuses münden, in welchem mindestens ein bewegbares, steuerdruckgetriebenes Schaltmittel zum wahlweise verbinden mindestens zweier Kanalabschnitte untergebracht ist.

Das Einsatzgebiet der vorliegenden Erfindung erstreckt sich auf Schaltventile zur Steuerung von Druckmittelströmen, insbesondere Pneumatikventile. Pneumatikventile existieren in unterschiedlichen Bauformen, wie insbesondere Schieberventile und Sitzventile. Die vorliegende Erfindung bietet eine flexibel hinsichtlich der Realisierung unterschiedlicher Ventilfunktionen einsetzbare alternative Bauform zu diesen klassischen Bauformen an.

Aus der DE 102 13 258 C1 geht ein der Gattung entsprechendes pneumatisches Schieberventil hervor. Das Schieberventil weist mehrere an einem Ventilgehäuse aus spritzgegossenem Kunststoff angeordnete äußere Anschlüsse auf, welche mittels eines innenliegenden Ventilschiebers schaltbar sind, in dem dieser in einer korrespondierenden Schieberbohrung axial verschiebbar angeordnet ist. Ventilgehäuseseitig sind mehrere axial beabstandet von einander und vom Kunststoff des Ventilgehäuses umspritzte Ventilbuchsen angeordnet, welche als verschleißresistente dynamischer Dichtungspartner zu den am Ventilschieber befestigten elastomeren Ringdichtungen dienen. Generelles Konstruktionsziel bei Schieberventilen ist es, die Anzahl der dynamischen Dichtungen zwischen dem Schaltmittel und dem Ventilgehäuse möglichst gering zu halten, um hiervon verursachte Reibungskraftverluste zu minimieren. Derartige Reibungskraftverluste müssen ansonsten durch einen entsprechend höheren Steuerdruck kompensiert werden, um ein sicheres Schalten zu gewährleisten. Insgesamt führt dies zu aufwendigen Bauteilen zur Umwandlung der vom Steuerdruck aufgebrachten Druckenergie in die mechanische Bewegung des Schaltmittels. Zu dem erfordert jede Ventilfunktion, wie 5/2-, 5/3-, 3/2-Funktionen, speziell ausgebildete Ventilschieber.

Es ist die Aufgabe der vorliegenden Erfindung, ein Mehrwegeventil zur Steuerung von Druckmittelströmen zu schaffen, mit welchem durch Einsatz einfacher technischer Mittel flexibel viele Ventilfunktionen umsetzbar ist, und welches reibungsarm aufgebaut ist.

Die Aufgabe wird ausgehend von einem Mehrwegeventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das Schaltmittel des Mehrwegeventils als aufblasbares Elastomerelement ausgebildet ist, welches in Folge Beaufschlagung mit Steuerdruck zwischen Kanalabschnitten liegende Ventilkammerabschnitte voneinander trennt. Dies bedeutet, dass in Folge Ablassen des Steuerdrucks diese Grenzstelle wieder geöffnet wird. Hierdurch lässt sich eine ventilinterne Schaltfunktion realisieren.

Der Vorteil der erfindungsgemäßen Lösung basiert darauf, dass von einem bewegbaren Ventilschieber völlig abgegangen wird und damit auch keine Reibungskraftverluste mehr auftreten. Da eine dynamische Abdichtung bislang stets einer Einfettung der relativ zueinander bewegbaren Bauteile bedurfte, und weil bei der erfindungsgemäßen Lösung hierauf verzichtet werden kann, wird ein hoher Grad an Umweltverträglichkeit erzielt. Ein fertigungstechnischer Vorteil ergibt sich ferner aus der Tatsache, dass keine Laufflächen mit hoher Oberflächengüte für die dynamischen Dichtungen mehr hergestellt werden müssen. Da durch die erfindungsgemäße Lösung kein wesentlicher Bewegungshub des Schaltmittels mehr erfolgen muss, kann ein auf diesem Prinzip basierendes Mehrwegeventil bei gleicher Leistung mit kleineren geometrischen Abmessungen dimensioniert werden, insbesondere in Längsrichtung. Alle gängigen Ventilfunktionen lassen sich auf der Basis der erfindungsgemäßen Lösung mit ein und dem selben mechanischen Ventilaufbau darstellen.

Die Ventilkammer kann in Anpassung an die Formgestaltung des Elastomerelements verschiedenartig ausgebildet sein. Bevorzugt wird eine hohlzylinderförmige Ausbildung der Ventilkammer, welche mit einem ringförmig ausgebildeten Elastomerelement zusammenwirkt. Die Ringform gestattet eine zuverlässig dichtende über den Umfang des innenliegenden Hohlzylinders verlaufende Dichtkante. Alternativ ist es auch möglich, die Ventilkammer oval oder polygonal auszubilden. Ebenfalls bevorzugt ist daneben eine quaderförmige oder schlitzförmige Gestaltung der innenliegenden Ventilkammer. Das hierzu korrespondierende Elastomerelement ist dann balgartig ausgebildet und bewirkt eine Dichtkante an einer Seitenfläche der Ventilkammer. Daneben ist es auch denkbar, das aufblasbare Elastomerelement direkt auf eine als Ventilsitz fungierende, vorzugsweise kreisrunde, Mündung eines Kanalabschnittes in die Ventilkammer wirken zu lassen. Insoweit wird bei dieser alternativen Ausführungsform auf das Ventilsitzprinzip zurückgegriffen.

Der Anschluss des aufblasbaren Elastomerelements an eine Steuerdruckquelle erfolgt vorzugsweise an der der Schaltkante gegenüberliegenden Seite. Ist das Elastomerelement ringförmig ausgebildet und besitzt innenradial eine Dichtkante, so ist der Anschluss für den Steuerdruck vorzugsweise außenradial angebracht. Anstelle eines Anschlusses in Form einer einzelnen Öffnung ist es auch denkbar, den Anschluss in Form einer sich über den gesamten Umfang erstreckenden außenradialen Nut des ringförmigen Elastomerelements auszubilden.

Im Bereich der Nut lässt sich das aufblasbare Elastomerelement insoweit vorteilhafterweise in eine korrespondierende Haltenut seitens des Ventilgehäuses einsetzen und von dort aus über einen gehäuseseitigen Steuerdruckkanal beaufschlagen. Das Einsetzen des Elastomerelements in das Ventilgehäuse kann durch eine Art Einclipsen erfolgen, in dem außenradiale Anformungen im Bereich der Nut des Elastomerelements mit korrespondierenden nutartigen Ausnehmungen seitens des Ventilgehäuses zusammenwirken. Über den hierdurch bewirkten Formschluss wird ein sicherer und abgedichteter Halt des Elastomerelements am Ventilgehäuse erzielt.

Die vorstehend hinsichtlich eines ringförmigen Elastomerelements vorgeschlagenen Detaillösungen lassen sich analog auch auf balkenartige Elastomerelemente übertragen.

Vorzugsweise sollte zumindest einem aufblasbaren Elastomerelement ein Pilotventil zugeordnet sein, über welches der Steuerdruck zum Aufblasen des Elastomerelements nach Maßgabe einer elektrischen Ansteuerung erzeugt. Es ist auch möglich, jedem einzelnen Elastomerelement im Sinne voller Flexibilität zur Umsetzung von verschiedenen Ventilfunktionen ein eigenes Pilotventil zu zuordnen oder ein einziges Pilotventil zur Ansteuerung mehrerer Elastomerelemente zu verwenden.

Gemäß einer weiteren die Erfindung verbessernden Maßnahme wird vorgeschlagen, bei der Herstellung des aufblasbaren Elastomerelements ein elektrisch leitfähiges Elastomermaterial zu verwenden. Dies bildet die Vorraussetzung dafür, die aktuelle Schaltstellung des Elastomerelements durch Bildung eines Stromkreises mit einem gehäuseseitigen elektrischen Kontakt zu erfassen und steuerungstechnisch auszuwerten. Ein separater Sensor zur Erfüllung dieser Funktion kann insoweit eingespart werden. Natürlich ist es auch denkbar, die Schaltstellung sensortechnisch - vorzugsweise über einen Drucksensor - zu Überwachen, welcher unterhalb des aufblasbaren Elastomerelements am Ventilgehäuse angeordnet ist. Durch Andrücken des Elastomerelements im aufgeblasenen Zustand gibt der Drucksensor ein Signal ab, welches die Betätigung des Elastomerelements, und damit des Mehrwegeventils, meldet.

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine schematische Darstellung eines Mehrwegeventils mit aufblasbaren Elastomerelementen in einer ersten Ausführungsform mit Ansteuerung gemäß 2x3/2-Ventilknktion,
- Figur 2: eine schematische Darstellung eines Mehrwegeventils mit aufblasbaren Elastomerelementen in einer ersten Ausführungsform mit Ansteuerung gemäß 5/2-Ventilfunktion,
- Figur 3: eine schematische Darstellung eines Mehrwegeventils mit aufblasbaren Elastomerelementen in einer ersten Ausführungsform mit Ansteuerung gemäß 5/3-Ventilfunktion,
- Figur 4: eine schematische Darstellung eines Mehrwegeventils mit aufblasbaren Elastomerelementen in einer zweiten Ausführungsform mit 5/2-Ventilfunktion, und
- Figur 5: eine schematische Darstellung eines Mehrwegeventils mit aufblasbaren Elastomerelementen in einer dritten Ausführungsform nach Art eines Sitzventils.

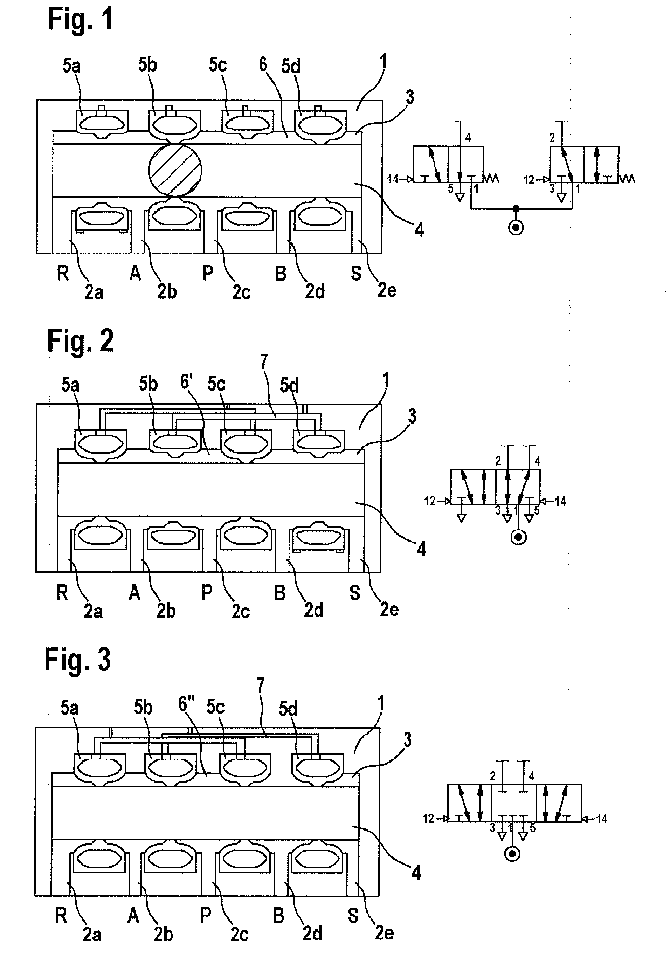

Gemäß Figur 1 besitzt ein Ventilgehäuse 1 eines Mehrwegeventils mehrere zu einer Seite hin ausgerichtete äußere Anschlüsse, umfassend P als Speisedruckanschluss, A und B als Arbeitsanschlüsse sowie R und S als Entlüftungsanschlüsse. Von jedem dieser Anschlüsse führen Kanalabschnitte 2a bis 2e in eine innere Ventilkammer 3. Die Ventilkammer 3 ist bei dieser Ausführungsform hohlzylinderförmig ausgebildet und besitzt einen mit einem kreisrunden Querschnitt versehenen Kammerkern 4.

Um den Kammerkern 4 herum sind ringförmige aufblasbare Elastomerelemente 5a bis 5d angeordnet. Die aufblasbaren Elastomerelemente 5a bis 5d sind jeweils in Axialrichtung gesehen zwischen benachbarten Kanalabschnitten 2a und 2e platziert.

Bei dieser Ausführungsform wird eine 2x3/2-Ventilfunktion nachgebildet gemäß des benachbart dargestellten Schaltbildes. Dem entsprechend sind die aufblasbaren Elastomerelemente 5e und 5d mit Steuerdruck beaufschlagt, so dass diese innenradial an den Kammerkern 4 zur Anlage kommen und so einen Kammerabschnitt 6 einschließen. Durch den Kammerabschnitt 6 wird der Anschluss P mit dem Anschluss B verbunden, so dass der Anschluss B mit Speisedruck beaufschlagt wird. Gleichzeitig wird der andere Anschluss A durch die bestehende Verbindung mit dem Anschluss R entlüftet.

In der Ausführungsform nach Figur 2 sind dagegen die Elastomerelemente 5a und 5c steuerdruckbeaufschlagt, so dass sich hier ein Ventilkammerabschnitt 6' ergibt. Verwirklicht ist bei dieser Ausführungsform durch Zusammenschalten der Elastomerelemente 5a mit 5c sowie 5b mit 5d über Verbindungskanäle 7 eine 5/2-Ventilfunktion. Abgebildet ist hier die Ventilstellung, in welcher der Anschluss P zur Speisedruckbeaufschlagung mit dem Anschluss A verbunden ist. In der anderen - hier nicht illustrierten - Schaltstellung ist dann der Anschluss P mit dem anderen Arbeitsanschluss B verbunden.

Bei der in Figur 3 dargestellten Ausführungsform sind alle Elastomerelemente 5a bis 5d aufgeblasen, so dass sich insgesamt vier Kammerabschnitte 6" bilden. Nachgebildet ist hier eine 5/3-Ventilfunktion gemäß des benachbarten Schaltbildes. Dem entsprechend befindet sich das Mehrwegeventil hier in seiner Mittelstellung, in welcher alle äußeren Anschlüsse P, A, B, R, S gesperrt sind.

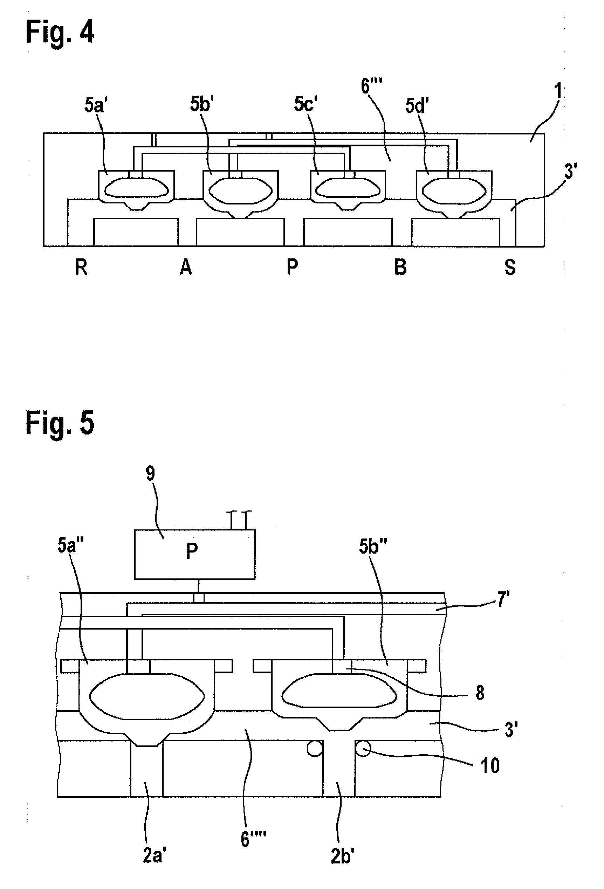

In der Figur 4 ist ein Mehrwegeventil in einer grundsätzlich anderen Ausführungsform dargestellt, bei welcher eine Ventilkammer 3' im Wesentlichen quaderförmig ausgebildet ist. Hierzu korrespondierend sind die Elastomerelemente 5a' bis 5d' balgartig gestaltet, um im Zusammenwirken mit der im Wesentlichen quaderförmigen Ventilkammer 3' eine zuverlässige Abdichtung zu gewährleisten. Dargestellt sind hier aufgeblasene Elastomerelemente 5c' und 5d', so dass die Anschlüsse P und B miteinander verbunden sind, um eine Speisedruckbeaufschlagung der Arbeitsleitung zu realisieren.

Nach Figur 5 wird in Umsetzung der erfindungsgemäßen Lösung das allgemeine Prinzip eines Sitzventils dargestellt. Zu diesem Zwecke kommt das Elastomerelement 5a" sowie 5b" direkt auf eine als Ventilsitz fungierende Mündung des hier zugeordneten Kanalabschnitts 2a' sowie 2b' in die Ventilkammer 3" zur Anlage. Zur Steuerdruckbeaufschlagung der Elastomerelemente 5a" und 5b" ist jeweils eine äußere Nut 8 vorgesehen, welche mit einem je zugeordneten Steuerdruckkanal 7' korrespondiert, der jeweils im Ventilgehäuse 1 ausgebildet ist und von einem je zugeordneten Pilotventil 9 nach Maßgabe einer elektrischen Ansteuerung druckluftbeaufschlagt wird.

Das aufblasbare Elastomerelement 5b wirkt bei diesem Beispiel ferner mit einem seitens des Ventilsitzes ortsfest zum Ventilgehäuse installierten Drucksensor 10 zusammen, der die Schaltstellung des Elastomerelementes 5" - exemplarisch - detektiert und an eine elektronische Steuereinheit zur weiteren Signalverarbeitung weiterleitet.

Die Erfindung ist nicht beschränkt auf die vorstehend beschriebenen Ausführungsformen. Es sind vielmehr auch Abwandlungen hiervon denkbar, welche vom Schutzbereich der nachfolgenden Ansprüche mit umfasst sind. So ist es beispielsweise auch möglich, anstelle eines Drucksensors das Elastomermaterial jedes aufblasbaren Elastomerelements aus einem elektrisch leitfähigen Elastomer herzustellen, um durch Stromkreisbildung im Zusammenwirken mit dem Ventilgehäuse die Schaltstellung eines jeden Elastomerelements zu Steuerungszwecken zu detektieren.

### Bezugszeichenliste

- **1**: Ventilgehäuse
- **2**: Kanalabschnitt
- **3**: Ventilkammer
- **4**: Kammerkern
- **5**: Elastomerelement
- **6**: Kammerabschnitt
- **7**: Steuerdruckkanal
- **8**: Nut
- **9**: Pilotventil
- **10**: Drucksensor

## Patentansprüche

1. Mehrwegeventil zur Steuerung von Druckmittelströmen, umfassend ein Ventilgehäuse (1) mit äußeren Leitungsanschlüssen (P, A, B, R, S), welche über hier zugeordnete Kanalabschnitte (2a - 2e) in eine innere Ventilkammer (3) münden, in welchen mindestens ein bewegbares steuerdruckbetriebenes Schaltmittel zum wahlweise verbinden mindestens zweier Kanalabschnitte (2a - 2e) untergebracht ist,
**dadurch gekennzeichnete, dass** das Schaltmittel mindestens eine als aufblasbares Elastomerelement (5a - 5d) ausgebildet ist, welches in Folge Beaufschlagung mit Steuerdruck zwischen Kanalabschnitten (6 - 6"') liegende Ventilkammerabschnitte (2a - 2e) voneinander trennt.

2. Mehrwegeventil nach Anspruch 1,
**dadurch gekennzeichnet, dass** die Ventilkammer (3) hohlzylinderförmig ausgebildet ist, und das hierzu korrespondierende Elastomerelement (5a - 5d) ringförmig ausgebildet ist.

3. Mehrwegeventil nach Anspruch 1 oder 2,
**dadurch gekennzeichnet, dass** das aufblasbare Elastomerelement (3) zum innenradialen Schalten außenradial mindestens einen Anschluss für den Steuerdruck aufweist.

4. Mehrwegeventil nach Anspruch 1 oder 2,
**dadurch gekennzeichnet, dass** das aufblasbare Elastomerelement (5a" - 5b") außen oder außenradial eine Nut (8) aufweist, die mit einem gehäuseseitigen Steuerdruckkanal (7) korrespondiert.

5. Mehrwegeventil nach Anspruch 1,
**dadurch gekennzeichnet, dass** die Ventilkammer (3') quaderförmig oder schlitzförmig ausgebildet ist, und das hierzu korrespondierende Elastomerelement (5a' - 5d') balkartig ausgebildet ist.

6. Mehrwegeventil nach Anspruch 1,
**dadurch gekennzeichnet, dass** das Elastomerelement (5a" - 5b") direkt auf eine als Ventilsitz fungierende Mündung eines Kanalabschnitts (2a", 2b") in die Ventilkammer (3") wirkt.

7. Mehrwegeventil nach einem der vorstehenden Ansprüche,
**dadurch gekennzeichnet, dass** das Elastomerelement (5a", 5b") im Bereich des Anschlusses für den Steuerdruck Anformungen zum formschlüssigen Einclipsen in korrespondierende Ausnehmungen im Ventilgehäuse (1) aufweist.

8. Mehrwegeventil nach einem der vorstehenden Ansprüche,
**dadurch gekennzeichnet, dass** das Elastomerelement (5a") aus einem elektrisch leitfähigen Elastomermaterial besteht, um die aktuelle Schaltstellung durch Auswertung elektrischer Signale zu überwachen.

9. Mehrwegeventil nach einem der vorstehenden Ansprüche,
**dadurch gekennzeichnet, dass** das aufblasbare Elastomerelement (5b") mit einem seitens des Ventilgehäuses ortsfest angeordneten Drucksensor (10) zusammenwirkt, um die aktuelle Schaltstellung zu überwachen.

10. Mehrwegeventil nach einem der vorstehenden Ansprüche,
**dadurch gekennzeichnet, dass** einem oder mehreren aufblasbaren Elastomerelementen (5a - 5d) ein Pilotventil (9) zur Erzeugung des Steuerdrucks zugeordnet ist.
